# EUROPEAN PATENT APPLICATION

(11) **EP 1 465 380 A1**
(43) Date of publication of application: **06.10.2004**
(21) Application number: 04005444.7
(22) Date of filing: 08.03.2004
(51) Int. Cl.: H04L 29/06

(54) **Device which executes authentication processing by using offline information, and device authentication method**

(30) Priority: 31.03.2003 JP 2003095671
(71) Applicant: Kabushiki Kaisha Toshiba, Tokyo (JP)
(72) Inventor: Kanazawa, Koji, c/o Toshiba Corp., Int. Prop. Div., Tokyo 105-8001 (JP)
(74) Representative: Henkel, Feiler & Hänzel

(57) **Abstract**

A computer includes a unit (23) which reads out authentication data recorded on a portable recording medium (16) by another device(A), a recording unit (25) which records the authentication data read out by the unit, and an authentication unit (20, 32) which performs mutual authentication processing between the authentication unit and the another device (A) by using the authentication data recorded in the recording unit.

## Description

The present invention relates to a device which executes authentication processing information, and a device authentication method.

Conventionally, for example, a server serving as a digital content providing source and a client device serving as a content providing destination communicate with each other, and authentication processing is performed to confirm that the client device is an authentic device licensed to utilize digital contents. After authentication processing confirms that the client device is a licensed device, for example, a key (data) for decrypting encrypted contents is exchanged. The client device can decrypt encrypted of digital contents by using the key (data) and utilize the contents.

Conventional authentication processing can confirm only whether a communication partner device is an authentic device using a licensed technique. The server cannot communicate with only a specific device out of licensed devices.

Assume that devices are connected by radio communication, and that only a device installed in building A is to be permitted to communicate. In this case, if a licensed device installed in building B adjacent to building A can communicate by radio with the device in building A, the device in building B can also communicate. Digital contents may be provided to the device which is installed in building B and is not intended as a digital content providing destination.

To prevent illicit login in logging in to a network, a method of recording login information on a portable recording medium and logging in to a network by using the recording medium has been proposed (e.g., Jpn. Pat. Appln. KOKAI Publication No. 2002-215590). According to the login method disclosed in Jpn. Pat. Appln. KOKAI Publication No. 2002-215590, only a client PC equipped with a recording medium which records login information can log in and utilize a network.

In this manner, only a device licensed using a licensing technique can be conventionally designated as a connection partner by executing authentication processing between devices. However, licensed devices cannot be limited to only a specific one as a communication partner.

It is an object of the present invention to limit licensed devices to only a specific one as a communication partner.

According to an embodiment of the present invention, there is provided a computer comprises a unit which reads out authentication data recorded on a portable recording medium by another device , a recording unit which records the authentication data read out by the unit , and an authentication unit which performs mutual authentication processing between the authentication unit and the another device by using the authentication data recorded in the recording unit.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing an example of the use form of devices 10, 12, and 14 according to an embodiment of the present invention;
FIG. 2 is a block diagram showing the arrangements of devices A and B shown in FIG. 1 according to the embodiment of the present invention;
FIG. 3 is a chart showing a sequence performed between the devices A and B according to the first embodiment of the present invention;
FIG. 4 is a flow chart for explaining mutual authentication processing operation in the device A according to the first embodiment of the present invention;
FIG. 5 is a flow chart for explaining mutual authentication processing operation in the device B according to the first embodiment of the present invention;
FIG. 6 is a view showing a system configuration which prompts the third party to guarantee that owner data input to the device A is unique to the administrator according to the second embodiment of the present invention;
FIGS. 7A and 7B are views each showing a structure example of authentication data containing valid use count data or valid period data according to the third or fourth embodiment of the present invention;
FIG. 8 is a flow chart for explaining mutual authentication processing operation in the device B according to the third embodiment of the present invention;
FIG. 9 is a flow chart for explaining mutual authentication processing operation in the device B according to the fourth embodiment of the present invention;
FIG. 10 is a chart showing a sequence performed between the devices A and B according to the fifth embodiment of the present invention; and
FIG. 11 is a chart showing a sequence performed between the devices A and B according to the sixth embodiment of the present invention.

Preferred embodiments of the present invention will be described below with reference to the several views of the accompanying drawing.

When a device in the embodiments is to execute, with a specific device, mutual authentication processing which requires a licensing technique such as a copyright protection function, the device provides the specific device with authentication data necessary for mutual authentication processing offline in advance by using a portable secure recording medium. The specific device provided with offline authentication data executes mutual authentication processing between the specific device and the authentication data providing device by using the authentication data. As a result, only the specific device which is not only licensed but also provided with authentication data in advance can receive and utilize, e.g., digital contents by communication. Examples of the portable secure recording medium are an SD (Secure Digital) card and memory stick.

The embodiments of the present invention can be applied not only between devices which require a licensing technique such as a copyright protection function, but also between devices which do not require any licensing technique.

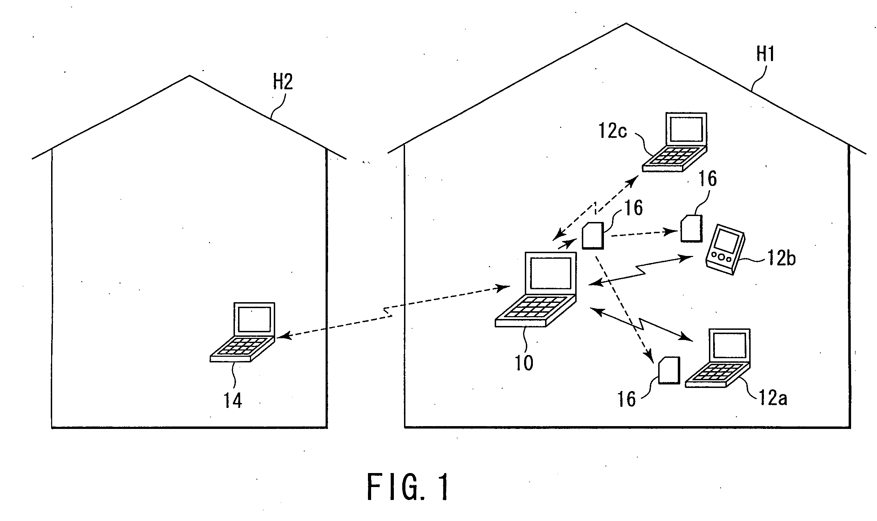

FIG. 1 is a view showing an example of the use form of devices 10, 12 (12a, 12b, and 12c), and 14 according to the embodiment. The devices 10, 12 (12, 12b, and 12c), and 14 according to the embodiment are implemented by computers (server, personal computer, and the like) whose operation is controlled by a program which is recorded on a recording medium such as a semiconductor memory, CD-ROM, DVD, or magnetic disk and loaded from the recording medium.

In FIG. 1, the device 10 is implemented by a server (computer) which provides, e.g., digital contents to another licensed specific device by radio communication. The device 10 will be explained as a device A (authenticating device). The devices 12 (12a, 12b, and 12c) and 14 are implemented by client devices (computers) which receive digital contents provided by the device A (server). In the embodiment, the devices 12 (12a, 12b, and 12c) and 14 must be not only confirmed as devices licensed by authentication processing between the devices 12 and 14, and the device A, but also confirmed as specific devices which are permitted to utilize digital contents, by mutual authentication processing using authentication data acquired offline by using a secure memory card 16 serving as a portable storage medium.

For example, in FIG. 1, the device A generates authentication data used for mutual authentication processing, and writes the authentication data in the secure memory card 16. By using the secure memory card 16, the device A provides the authentication data to, e.g., the client devices 12a and 12b installed in building H1, allowing the client devices 12a and 12b to utilize contents. In this case, the client device 12c has not acquired the authentication data by using the secure memory card 16, and cannot utilize any content though the client device 12c is also installed in building H1. Similarly, the client device 14 installed in building H2 cannot utilize any content unless it acquires authentication data by using the secure memory card 16 even if the client device 14 is installed in a range in which the device 14 can communicate by radio with the device A. The client devices 12a and 12b which acquire authentication data from the device A by using the secure memory card 16 will be explained as a device B (authentication target device).

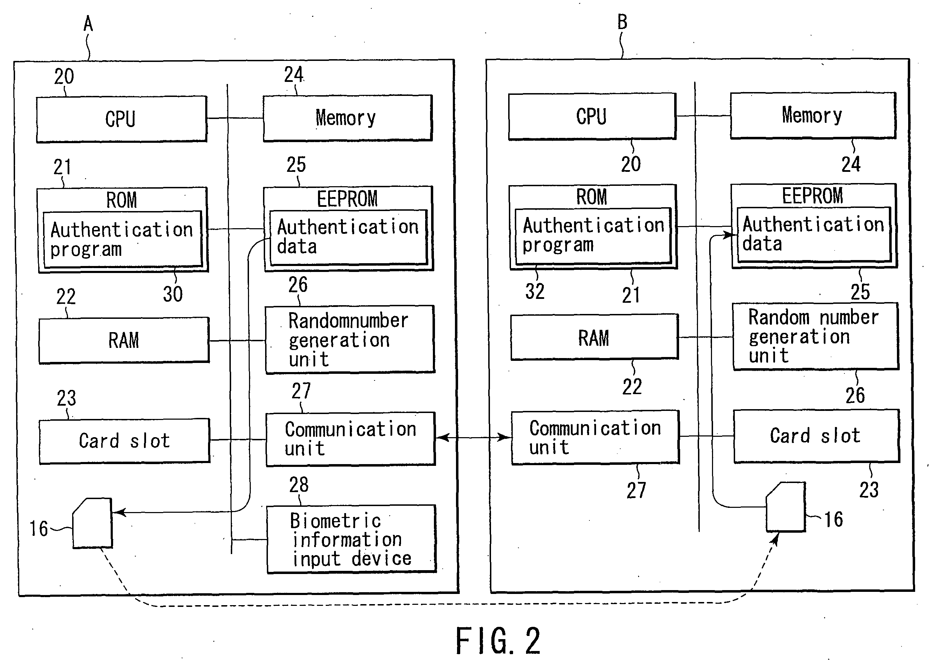

FIG. 2 is a block diagram showing the arrangements of the devices A and B shown in FIG. 1. As shown in FIG. 2, the device A (server) has a CPU 20, ROM 21, RAM 22, card slot 23, memory 24, EEPROM (Electrically Erasable and Programmable ROM) 25, random number generation unit 26, communication unit 27, and biometric information input device 28. In addition, the device A has functions attached to a general computer such as a display device (LCD (Liquid Crystal Display)) and input device (keyboard, mouse, or the like).

The CPU 20 executes various processes by executing programs recorded in the ROM 21 or RAM 22. The CPU 20 executes mutual authentication between the device A and another device (device B or the like) serving as a communication partner in accordance with an authentication program 30 recorded in the ROM 21. The CPU 20 determines that the partner device is licensed and permitted to utilize contents. The CPU 20 makes the device A function as a content server which provides digital contents recorded in the memory 24 to the mutually authenticated device. The CPU 20 executes the authentication program 30 to execute mutual authentication processing by using authentication data between the device A and the device B which has acquired the authentication data written in the secure memory card 16. The authentication program 30 can perform calculation using the same function as that of an authentication program 32 (to be described later) executed in another device (device B) subjected to mutual authentication processing.

The ROM 21 records programs and data, and includes the authentication program 30 for mutual authentication between the device A and another device.

The RAM 22 records programs and data.

The card slot 23 executes read/write of data from/in a portable recording medium. The card slot 23 accepts the secure memory card 16 such as an SD card in which the authenticity of recorded data is guaranteed.

The memory 24 records programs and data. When the device A is used as a digital content server, the memory 24 stores content data.

The EEPROM 25 is a nonvolatile recording medium, and records, e.g., authentication data generated by the authentication program 30.

The random number generation unit 26 generates a random number necessary to execute mutual authentication processing between the device A and another device (device B).

The communication unit 27 communicates with another device, and performs communication via a cable in addition to radio communication.

The biometric information input device 28 is used to input biometric information, and allows inputting pattern data such as a fingerprint, palm print, iris, retina, palm vein, or voiceprint. Biometric information input via the biometric information input device 28 is processed as owner data used to generate authentication data (second embodiment).

As shown in FIG. 2, the device B (client) has a CPU 20, ROM 21, RAM 22, card slot 23, memory 24, EEPROM 25, random number generation unit 26, and communication unit 27. The same reference numerals as those of the device A denote the same parts, and a description thereof will be omitted.

The ROM 21 of the device B records the authentication program 32 for mutual authentication between the device B and the device A. The CPU 20 executes the authentication program 32 to execute mutual authentication between the device B and the device A which has written authentication data in the secure memory card 16, by using the authentication data loaded from the secure memory card 16. The authentication program 32 can perform calculation using the same function as that of the authentication program 30 executed in another device (device A) subjected to mutual authentication processing.

In FIG. 2, authentication processing is executed by the authentication programs 30 and 32 recorded in the ROMs 21 of the devices A and B. Authentication processing may be executed by loading an authentication program recorded in the memory 24 to the RAM 22. The authentication program recorded in the memory 24 may be loaded from another recording medium (CD-ROM or the like) and recorded, or may be received by communication via the communication unit 27 and recorded.

### (First Embodiment)

The operation of the first embodiment will be explained.

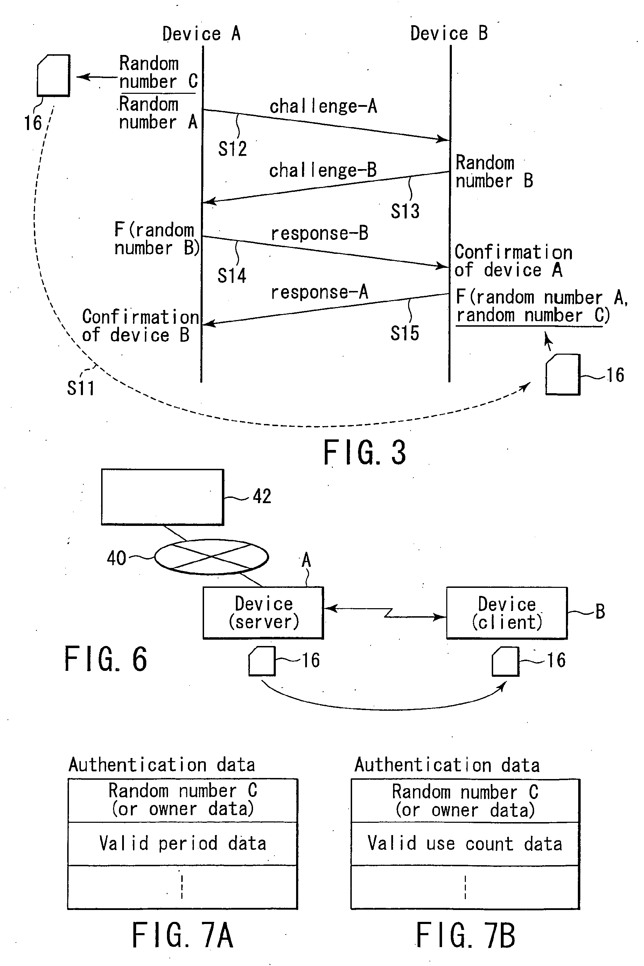

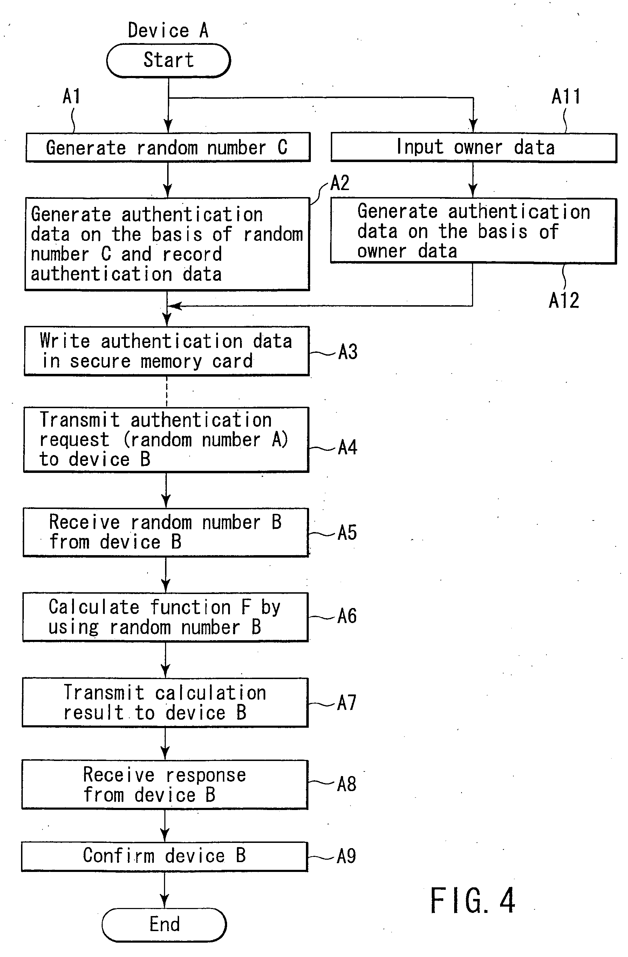

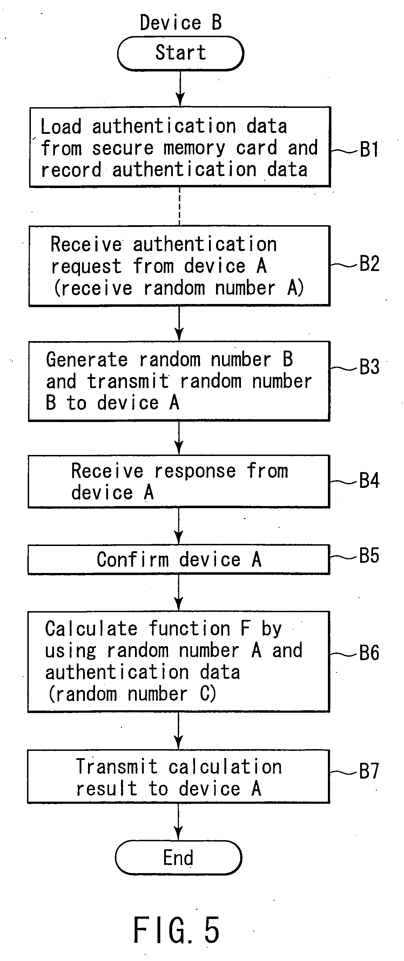

FIG. 3 is a chart showing a sequence performed between devices A and B. FIG. 4 is a flow chart for explaining mutual authentication processing operation in the device A. FIG. 5 is a flow chart for explaining mutual authentication processing operation in the device B. The devices A and B use a common licensing technique.

Before the start of authentication, the device A generates authentication data used to determine whether a communication partner device is an authentic licensed device and whether the device is permitted to utilize, e.g., digital contents. More specifically, the device A executes an authentication program 30 to cause a random number generation unit 26 to generate a random number (random number C) (step A1). The device A generates authentication data used for mutual authentication processing to be executed between the device A and another device on the basis of the random number C, and records the authentication data in an EEPROM 25 (step A2). In the first embodiment, the authentication data is data of the random number C.

The device A writes the authentication data recorded in the EEPROM 25 in a secure memory card 16 via a card slot 23 (step A3).

The authentication data (random number C) generated by the device A is transferred offline to only the device B, i.e., specific client devices 12a and 12b shown in FIG. 1 by using the secure memory card 16 (S11 in FIG. 3). The device B loads the authentication data generated in the device A from the secure memory card 16 inserted into the card slot 23, and records the authentication data in the EEPROM 25 (step B1 in FIG. 5).

The authentication data generated in the device A is provided to the device B by using the secure memory card 16 serving as a physically portable recording medium, and is not acquired by an unspecified device. The use of the secure memory card 16 guarantees the authenticity of the recorded authentication data. One secure memory card 16 can provide authentication data to a plurality of devices which are to be permitted to utilize contents. After the device B loads the authentication data from the secure memory card 16 and records it, the secure memory card 16 need not be kept inserted in the card slot 23.

After the authentication data generated by the device A is provided to the device B, mutual authentication processing can be executed between the devices A and B.

The device A which starts authentication causes the random number generation unit 26 to generate a random number A. The device A transmits the random number A to the communication partner device B via the communication unit 27 (challenge-A in S12), and issues an authentication request (step A4).

The device B receives challenge-A, i.e., the authentication request (random number A) from the device A (step B2), and records the random number A acquired from the device A. In order to confirm whether the partner which has transmitted challenge-A is an authentic device, the device B causes the random number generation unit 26 to generate a random number B, and transmits the random number B to the device A which has transmitted challenge-A (challenge-B in S13) (step B3).

The device A receives challenge-B (S13) (step A5), and calculates a function F complying with the authentication program 30 by using the random number B which has been generated by the device B and transmitted by challenge-B (step A6). The device A transmits data of the calculation result to the device B (response-B in S14) (step A7).

The device B receives response-B transmitted from the device A (step B4), and confirms the device A (step B5). More specifically, the device B calculates the function F complying with an authentication program 32 by using the random number B transmitted to the device A. The device B determines whether the calculation result coincides with the calculation result received from the device A. If so, the device B confirms that response-B from the device A is authentic.

Since the device B can confirm that challenge-A from the device A is an authentic authentication request, the device B calculates the function F by using the value of the random number A received in advance from the device A and the random number C acquired offline by using the secure memory card 16 (step B6). The device B transmits the calculation result to the device A (response-A in S15) (step B7).

The device A receives response-A transmitted from the device B (step A8), and confirms the device B (step A9). More specifically, the device A calculates the function F complying with the authentication program 30 by using the random number A transmitted to the device B and the random number C (authentication data recorded in the EEPROM 25) provided using the secure memory card 16. The device A determines whether the calculation result coincides with the calculation result received from the device B. If so, the device A confirms that response-A from the device B is authentic. As a result, the device A can confirm by the random number A that the device B is an authentic licensed device, and by the random number C that the device B is a device approved in advance by the device A.

After the device A determines that response-A is authentic, an effective session key can be shared between the authenticated devices. Hence, the device B can decrypt, e.g., encrypted digital contents transmitted from the device A by using the key, and utilize the digital contents.

In this fashion, authentication data (random number C) generated by the device A is provided to the device B by using the secure memory card 16. Mutual authentication processing is executed between the devices A and B by using the authentication data. A client device which can communicate with the device A, is licensed, but has not acquired authentication data from the secure memory card 16 is not authenticated by the device A. The client device cannot utilize contents provided by the device A.

### (Second Embodiment)

In the first embodiment, the random number C generated by the secure memory card 16 is used to generate authentication data by the device A. The authentication data is generated using data on, e.g., the owner who manages the device A.

In the second embodiment, steps A11 and A12 are executed instead of steps A1 and A2 of the flow chart shown in FIG. 4.

When a device A is to generate authentication data used for mutual authentication between the device A and another device, the device A requests the owner to input owner data. The owner data is data capable of objectively specifying the administrator of the device A. Examples of the owner data are biometric information acquired from the administrator, and information (e.g., credit card number or bank account number) which is guaranteed by the third party to be unique to the administrator.

For example, when biometric information is used as authentication data, biometric information (e.g., fingerprint pattern) is input from a biometric information input device 28. The device A converts the biometric information into data of a predetermined format, and uses it as authentication data (steps A11 and A12).

The same processing as that of the first embodiment is executed except that owner data is used to generate authentication data to be provided to a device B by using a secure memory card 16 (steps A11 and A12), and a description thereof will be omitted (steps A3 to A9).

FIG. 6 shows a system configuration which prompts the third party to guarantee that owner data input to the device A is unique to the administrator.

For example, when a credit card number is used as owner data, the device A is connected to a server 42 in a credit card company via a network 40 such as the Internet. When owner data (credit card number) used as authentication data is input, the device A inquires the server 42 via the network 40. In the inquiry to the server 42, the device A prompts the administrator to input, e.g., an ID or password which has already been registered in the server 42 and is known by only the administrator, and personal data such as a name and address. The device A transmits these data and the input credit card number. The server 42 compares the credit card number registered in correspondence with personal data, and the credit card number acquired from the device A. If the credit card numbers coincide with each other, the server 42 notifies the device A as a response that the credit card number input by the administrator is authentic. When the server 42 guarantees that the input credit card number is authentic, the device A uses the credit card number as authentication data, writes it in the secure memory card 16, and provides it to another device.

In this way, owner data capable of specifying the administrator of the device A is used as authentication data provided to the device B by using the secure memory card 16. This can inhibit the administrator of the device A from providing authentication data to an unspecified device. Providing authentication data means providing personal data of the administrator to another person. The administrator can be expected to carefully treat the secure memory card 16 so as not to give the secure memory card 16 to an unspecified person or allow another person to use the secure memory card 16 without any permission. Thus, only a specific device (device B) recognized by the administrator of the device A can utilize contents provided by the device A.

In the above description, owner data is directly used as authentication data. Also, input owner data can be converted by predetermined processing to use the converted data.

### (Third Embodiment)

In the third embodiment, authentication data provided from a device A to a device B contains valid period data representing the valid period of the authentication data. FIG. 7A shows authentication data recorded on a secure memory card 16 in the device A.

When owner data is to be generated, the device A generates a random number C, similar to the first embodiment, or inputs owner data, similar to the second embodiment (step A1 or A11). In the following description, the random number C is adopted.

The device A generates valid period data, generates authentication data from the valid period data and the random number C or owner data (FIG. 7A) (step A2 or A12), and writes the authentication data in the secure memory card 16. The valid period data may be generated in accordance with a valid period input by the administrator of the device A via an input device, or may be determined in advance by an authentication program 30. The valid period data can designate the valid period of authentication data as, e.g., one week or one month. The valid period may correspond to a period after authentication data is generated in the device A or a period after authentication data is loaded from the secure memory card 16 and stored in the device B.

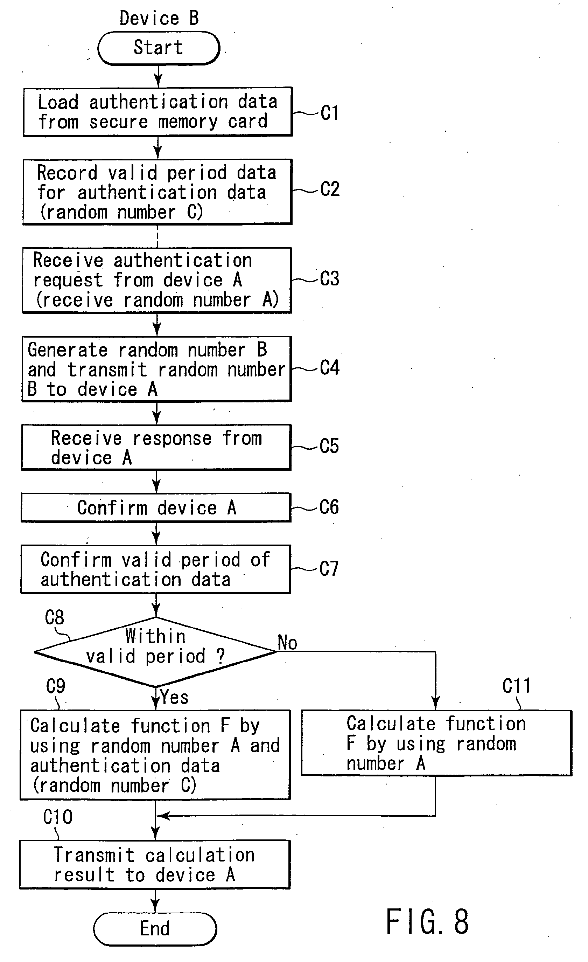

FIG. 8 is a flow chart for explaining mutual authentication processing operation in the device B.

Authentication data generated by the device A is transferred offline to only the device B, i.e., specific client devices 12a and 12b shown in FIG. 1 by using the secure memory card 16. The device B loads the authentication data generated in the device A from the secure memory card 16 inserted into a card slot 23, and records the authentication data in an EEPROM 25 (step C1 in FIG. 8). The device B also records in the EEPROM 25 valid period data for the authentication data that is loaded from the secure memory card 16 (step C2).

Processes in steps C3 to C6 shown in FIG. 8 are executed similarly to processes in steps B2 to B5 shown in the flow chart of FIG. 5, and a description thereof will be omitted.

After the device B confirms the device A by processing in step C6, the device B confirms whether the current time falls within the valid period of the authentication data, on the basis of the valid period data recorded in the EEPROM 25 (step C7).

If the current time is confirmed to fall within the valid period, the device B calculates a function F by using the value of a random number A received in advance from the device A and the random number C acquired offline by using the secure memory card 16 (step C9). The device B transmits the calculation result to the device A (step C10) (equivalent to steps B6 and B7 in FIG. 5).

If the current time is confirmed not to fall within the valid period, the device B calculates the function F by using the value of the random number A received in advance from the device A (step C11), and transmits the calculation result to the device A (step C10). That is, authentication processing is executed without using the authentication data acquired by using the secure memory card 16. This authentication processing can confirm that the device B is a licensed device.

If the current time can be confirmed not to fall within the valid period, the device B may be treated as if authentication failed.

Valid period data contained in authentication data can prevent another device (device B) from permanently using contents provided by the device A. Also, an increase in the number of devices capable of using contents without any limitation can be prevented.

### (Fourth Embodiment)

In the fourth embodiment, authentication data provided from a device A to a device B contains valid use count data representing the valid execution count of authentication processing using the authentication data. FIG. 7B shows authentication data recorded on a secure memory card 16 in the device A.

When owner data is to be generated, the device A generates a random number C, similar to the first embodiment, or inputs owner data, similar to the second embodiment (step A1 or A11.) In the following description, the random number C is adopted.

The device A generates valid use count data, generates authentication data from the valid use count data and the random number C or owner data (FIG. 7B) (step A2 or A12), and writes the authentication data in the secure memory card 16. The valid use count data may be generated in accordance with a valid use count input by the administrator of the device A via an input device, or may be determined in advance by an authentication program 30. The valid use count data can designate the valid use count of authentication data as, e.g., 10 times or 100 times.

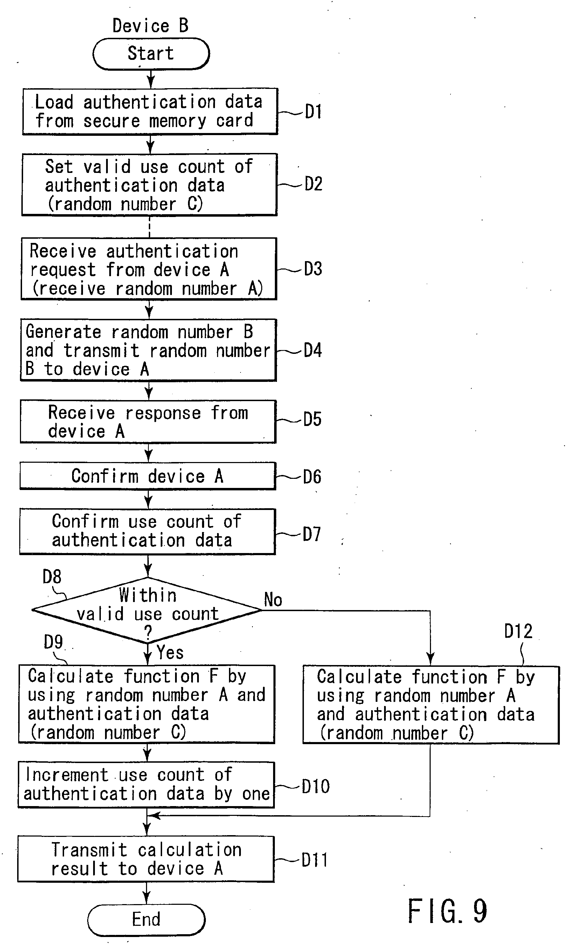

FIG. 9 is a flow chart for explaining mutual authentication processing operation in the device B.

Authentication data generated by the device A is transferred offline to only the device B, i.e., specific client devices 12a and 12b shown in FIG. 1 by using the secure memory card 16. The device B loads the authentication data generated in the device A from the secure memory card 16 inserted into a card slot 23, and records the authentication data in an EEPROM 25 (step D1 in FIG. 9). The device B also records in the EEPROM 25 valid use count data for the authentication data that is loaded from the secure memory card 16 (step D2).

Processes in steps D3 to D6 shown in FIG. 9 are executed similarly to processes in steps B2 to B5 shown in the flow chart of FIG. 5, and a description thereof will be omitted.

After the device B confirms the device A by processing in step D6, the device B confirms whether the current execution count of authentication processing using authentication data falls within the valid use count, on the basis of the valid use count data recorded in the EEPROM 25 (step D7). The execution count of authentication processing using authentication data (use count of authentication data) is counted every time calculation processing using the authentication data is executed (step D10 to be described later).

If the current execution count is confirmed to fall within the valid use count, the device B calculates a function F by using the value of a random number A received in advance from the device A and the random number C acquired offline by using the secure memory card 16 (step D9). The device B increments the use count of the authentication data by one, stores the resultant count (step D10), and transmits the calculation result to the device A (step D11).

If the current execution count is confirmed not to fall within the valid use count, the device B calculates the function F by using the value of the random number A received in advance from the device A (step D12), and transmits the calculation result to the device A (step D11). That is, authentication processing is executed without using the authentication data acquired by using the secure memory card 16. In this authentication processing, the device B can be confirmed to be a licensed device.

If the execution count is confirmed not to fall within the valid use count, the device B may be treated as if authentication failed.

Valid use count data contained in authentication data can prevent another device (device B) from using contents provided by the device A without any limitation.

In the description of the third and fourth embodiments, either valid period data or valid use count data is used. Both the data may be contained in authentication data, written in the secure memory card 16, and provided to another device. A device which acquires authentication data offline by using the secure memory card 16 manages the use limitation of authentication data by using both the valid period data and valid use count data, as described above.

In the description of the third and fourth embodiments, mutual authentication using authentication data is not performed when the use count or period of the device B which has acquired authentication data generated in the device A exceeds the valid use count or valid period. The device A which has generated authentication data may confirm the valid use count or valid period. In this case, when the device A confirms that the use count or period of the device B exceeds the valid use count or valid period, mutual authentication using authentication data is not performed.

### (Fifth Embodiment)

In the first to fourth embodiments, the device B transmits to the device A the calculation result of the function F calculated using the random number C (steps B6 and B7, C9 and C10, and D9 to D11). Mutual authentication can be made more reliable by transmitting the calculation result of the function F calculated using the random number C from the device A to the device B.

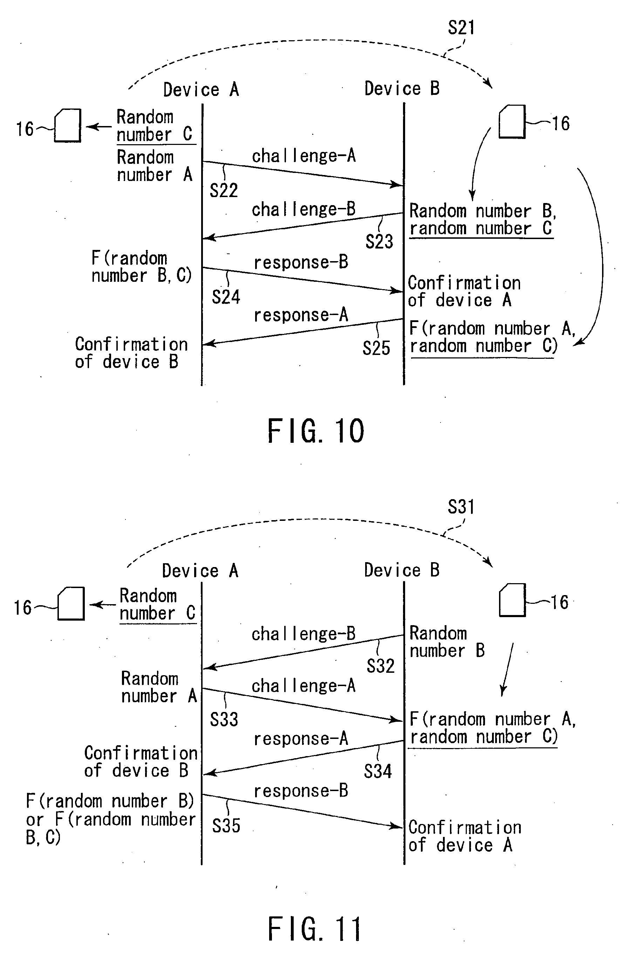

FIG. 10 is a chart showing a sequence performed between devices A and B according to the fifth embodiment. The processing except processes
(corresponding to S13 and S14 shown in FIG. 3)
associated with steps S23 and S24 shown in FIG. 10 is executed similarly to the processing shown in FIG. 3, and a description thereof will be omitted.

The device B receives challenge-A, i.e., an authentication request (random number A) from the device A, and records the random number A acquired from the device A. In order to confirm whether the partner which has transmitted challenge-A is an authentic device, the device B causes a random number generation unit 26 to generate a random number B. The device B transmits the random number B and authentication data (random number C) acquired using a secure memory card 16 to the device A which has transmitted challenge-A (challenge-B in S23).

The device A receives challenge-B (S23), and calculates a function F complying with an authentication program 30 by using the random number B which has been generated by the device B and transmitted by challenge-B, and the authentication data (random number C) which is stored in an EEPROM 25 and provided to another device by using the secure memory card 16. The device A transmits data of the calculation result to the device B (response-B in S24).

The device B receives response-B transmitted from the device A, and confirms the device A. More specifically, the device B calculates the function F complying with an authentication program 32 by using the random number B transmitted to the device A and the authentication data (random number C) acquired using the secure memory card 16. The device B determines whether the calculation result coincides with the calculation result received from the device A. If so, the device B confirms that response-B from the device A is authentic.

Similar to the first to fourth embodiments, the calculation result of the function F calculated using the random number C is transmitted from the device B to the device A. Also, the calculation result of the function F calculated using the authentication data (random number C) provided to another device is transmitted from the device A to the device B. This can make authentication more reliable.

### (Sixth Embodiment)

In the first to fifth embodiments, an authentication request is issued from the device A to the device B (challenge-A). Also, an authentication request may be issued from the device B to the device A.

FIG. 11 is a chart showing a sequence performed between devices A and B according to the sixth embodiment.

Processing of providing authentication data generated in the device A to another device B by using a secure memory card 16 is executed similarly to the first embodiment (S11) (S31).

After authentication data generated by the device A is provided to the device B, mutual authentication processing can be executed between the devices A and B.

The device B which starts authentication causes a random number generation unit 26 to generate a random number B. The device B transmits the random number B to the communication partner device A via a communication unit 27 (challenge-B in S32), and issues an authentication request.

The device A receives challenge-B, i.e., the authentication request (random number B) from the device B, and records the random number B acquired from the device B. In order to confirm whether the partner which has transmitted challenge-B is an authentic device, the device A causes the random number generation unit 26 to generate a random number A. The device A transmits the random number A to the device B which has transmitted challenge-B (challenge-A in S33).

The device B receives challenge-A (S33), and calculates a function F complying with an authentication program 32 by using the random number A which has been generated by the device A and transmitted by challenge-A, and authentication data (random number C) which is acquired using the secure memory card 16. The device B transmits data of the calculation result to the device A (response-A in S34).

The device A receives response-A transmitted from the device B, and confirms the device B. More specifically, the device A calculates the function F complying with an authentication program 30 by using the random number A transmitted to the device B and the authentication data (random number C) provided to another device by using the secure memory card 16. The device A determines whether the calculation result coincides with the calculation result received from the device B. If so, the device A confirms that response-A from the device B is authentic.

Since the device A can confirm that challenge-B from the device B is an authentic authentication request, the device A calculates the function F by using the value of the random number B received in advance from the device B (or the value of the random number B and the random number C provided using the secure memory card 16). The device A transmits the calculation result to the device B (response-B in S35).

The device B receives response-B transmitted from the device A, and confirms the device A. More specifically, the device B calculates the function F complying with the authentication program 32 by using the random number B transmitted to the device A (or the random number B and the random number C acquired using the secure memory card 16). The device B determines whether the calculation result coincides with the calculation result received from the device A. If so, the device B confirms that response-B from the device A is authentic. Consequently, the device B can confirm by the random number B that the device A is an authentic licensed device, and by the random number C that the device A is a content providing source.

After the device B determines that response-B is authentic, an effective session key can be shared between the authenticated devices. Hence, the device B can decrypt, e.g., encrypted digital contents transmitted from the device A by using the key, and utilize the digital contents.

As described above, mutual authentication processing can be executed by issuing an authentication request to the device A from the device B which has been provided with authentication data from the device A by using the secure memory card 16. The sequence in the sixth embodiment can also be applied to the second to fifth embodiments.

In the description of the above embodiments, the device B acquires authentication data (random number C) from one device A by using the secure memory card 16. Authentication data generated by a plurality of devices can be similarly read out from secure memory cards and stored. In this case, when the device B receives an authentication request from another device, the device B selects one of the plurality of authentication data and executes authentication processing between the device B and the device. If authentication using the authentication data fails, the device B selects the next authentication data and similarly executes authentication processing. This processing is repeatedly executed until authentication is established. Accordingly, the device B can perform mutual authentication between the device B and different devices by using different authentication data.

The device 10 is implemented by a computer, but can also be formed as a single stand-alone type device. In this case, the device 10 is connected to a computer, and executes authentication processing in accordance with a request from the computer.

As has been described above, in authentication processing between devices which require a license for a copyright protection function or the like, a device is authenticated as an authentic licensed device.
Also, a device which has acquired authentication data offline by using a portable storage medium (secure memory card 16) can be authenticated, thereby limiting communication partners.

## Claims

1. A computer **characterized by** comprising:
a unit (23) which reads out authentication data recorded on a portable recording medium (16) by another device (A);
a recording unit (25) which records the authentication data read out by the unit; and
an authentication unit (20, 32) which performs mutual authentication processing between the authentication unit and the another device (A) by using the authentication data recorded in the recording unit.

2. The computer according to claim 1, **characterized in that** the recording unit (25) records the authentication data on a nonvolatile recording medium.

3. A computer comprising:
a generation unit (20, 30) which generates authentication data;
a unit (23) which records the authentication data generated by the generation unit on a portable recording medium (16);
a recording unit (25) which records the authentication data recorded on the recording medium (16); and
an authentication unit (20, 30) which performs mutual authentication processing between the authentication unit and another device (B) by using the authentication data recorded by the recording unit.

4. The computer according to claim 3, **characterized in that** the recording unit (25) records the authentication data on a nonvolatile recording medium.

5. The computer according to claim 1, **characterized in that** the authentication unit (20, 32) includes:
a determination unit which determines whether current time falls within a valid period, on the basis of data representing the valid period contained in the authentication data; and
an invalidation unit which invalidates the authentication data when the determination unit determines that the current time does not fall within the valid period.

6. The computer according to claim 3, **characterized in that** the generation unit (20, 30) generates authentication data containing data representing a valid period.

7. The computer according to claim 1, **characterized in that** the authentication unit (20, 32) comprises:
a count storage unit which stores an execution count of mutual authentication processing;
a determination unit which determines whether the execution count falls within a valid count, on the basis of data representing the valid count contained in the authentication data; and
an invalidation unit which invalidates the authentication data when the determination unit determines that the execution count does not fall within the valid count.

8. The computer according to claim 3, **characterized in that** the generation unit generates authentication data containing data representing a valid count.

9. The computer according to claim 1, **characterized in that** the authentication unit comprises:
a first reception unit (B2) which receives an authentication request from the another device; and
a first transmission unit (B3) which transmits data generated using the authentication data to the another device in response to the authentication request received by the first reception unit.

10. The computer according to claim 3, **characterized in that** the authentication unit comprises:
a second transmission unit which transmits an authentication request to the another device;
a second reception unit which receives data transmitted from the another device in accordance with the authentication request transmitted by the second transmission unit; and
a determination unit which determines whether the data received by the second reception unit has been generated using the authentication data.

11. The computer according to claim 1, **characterized in that** the authentication unit comprises:
a third transmission unit which transmits data generated using the authentication data to the another device;
a third reception unit which receives data transmitted from the another device; and
a determination unit which determines whether the data received by the third reception unit has been generated using the authentication data.

12. The computer according to claim 3, **characterized in that** the authentication unit comprises:
a third transmission unit which transmits data generated using the authentication data to the another device;
a third reception unit which receives data transmitted from the another device; and
a determination unit which determines whether the data received by the third reception unit has been generated using the authentication data.

13. The computer according to claim 1, **characterized in that** the portable recording medium is configured to guarantee authenticity of recorded data.

14. The computer according to claim 3, **characterized in that** the portable recording medium is configured to guarantee authenticity of recorded data.

15. The computer according to claim 3, **characterized in that** the generation unit comprises:
an acquisition unit which acquires owner data; and
an authentication data generation unit which generates authentication data on the basis of the owner data.

16. The computer according to claim 15, **characterized in that** the acquisition unit acquires biometric information of an owner as the owner data.

17. The computer according to claim 15, **characterized in that** the acquisition unit comprises:
an input unit which inputs the owner data; and
an owner data confirmation unit which confirms authenticity of the owner data input by the input unit.

18. A device authentication method **characterized by** comprising:
causing a first device to generate authentication data and record the authentication data on a portable recording medium;
causing a second device to read out the authentication data from the portable recording medium; and
performing mutual authentication processing by using the authentication data between the first and second devices.

19. The method according to claim 18, **characterized in that** in the mutual authentication processing,
first data generated by the first device on the basis of the authentication data is transmitted to the second device,
second data generated by the second device on the basis of the authentication data is transmitted to the first device,
the first device determines whether the data transmitted from the second device has been generated using the authentication data, and
the second device determines whether the data transmitted from the first device has been generated using the authentication data.
